# EUROPEAN PATENT SPECIFICATION

(11) **EP 1 772 324 B1**
(45) Date of publication and mention of the grant of the patent: **03.06.2009**
(21) Application number: 06020179.5
(22) Date of filing: 26.09.2006
(51) Int. Cl.: B60R 21/18

(54) **Connected body of airbelt and anchor and airbelt apparatus**
Aufblasbarer Sicherheitsgurt mit Luftsack für Kraftfahrzeuge
Ceinture de sécurité pneumatique d'automobile comportant un sac gonflable

(30) Priority: 07.10.2005 JP 2005295143; 03.08.2006 JP 2006212246
(43) Date of publication of application: 11.04.2007
(73) Proprietor: TAKATA CORPORATION, Minato-ku, Tokyo 106-8510 (JP)
(72) Inventor: Itoga, Yasuo, Minato-ku Tokyo 106-8510 (JP); Murakami, Yoshiki, Minato-ku Tokyo 106-8510 (JP); Ohhashi, Kiyotaka, Minato-ku Tokyo 106-8510 (JP); Higuchi, Masahiro, Minato-ku Tokyo 106-8510 (JP)
(74) Representative: Banzer, Hans-Jörg

(56) References cited:
- EP-A- 0 652 140
- EP-A1- 0 965 496
- EP-A1- 0 970 855
- EP-A2- 0 901 945
- JP-A- 2000 212 864
- JP-A- 2001 122 065
- US-A- 3 970 329
- US-A1- 2002 074 784

## Description

The present invention relates to a member for protecting an occupant of a mobile object, such as a motor vehicle or the like at a time of motor vehicle collision, or the like, and more particularly to a connected body of an airbelt configured to be expanded by means of gas from a gas generating device, and an anchor. Further, the present invention relates to an airbelt apparatus provided with the connected body of the airbelt and the anchor.

### [Background Art]

As is widely known, the airbelt apparatus is an apparatus in which a part of webbing of a seatbelt apparatus (specifically, the part to be in contact with a body of an occupant) is constructed with an expandable airbelt. A gas generating device is activated at a time of collision of a motor vehicle, or a lateral turning of the same, and the airbelt is expanded. As described in the Unexamined Japanese Patent Application Publication No. 2001-260807, or the like, as the airbelt apparatus, there has been an airbelt apparatus, in which one end of the airbelt is connected to a tongue, a gas passage is respectively provided in the tongue and a buckle to which the tongue is mounted, and gas is introduced into the airbelt through the gas passage. The other end of the airbelt is connected to webbing in a similar manner to that of an ordinary seatbelt apparatus by means of stitching work, and the webbing is retracted by a seatbelt retractor.

In EP 0 652 140 A1, an automobile safety airbelt with airbag is illustrated. The airbelt comprises an airbag which is folded and protected by a protection cover having a breakable section. In case of a traffic accident, the safety airbelt is inflated which causes the breakable section of the protective cover to be broken. The protection cover is made of a fabric material and is connected to a fixing member by being passed through an opening of the fixing member, folded back and sewn together.

In EP 0 901 945 A2, an inflatable safety belt device is described. The airbag device comprises a shoulder belt which includes a bag-like belt and a knit cover, which covers the bag-like belt and is made of a fabric. At one side, the shoulder belt is connected to a lap belt. The lap belt is connected to a tongue for connecting to a buckle by movably inserting the lap belt through an opening of the tongue.

In US 2002/0074784 A1, an inflatable seatbelt apparatus is described. The seatbelt apparatus includes an airbelt with a webbing having a part formed as a bag-like portion and a remaining part formed as a single-bend portion. A bag is stored in the bag-like portion of the webbing. Further, a cover is provided for covering the webbing. Further, a non-inflatable webbing is provided for being applied to the laps of an occupant. The non-inflatable webbing is movably connected to a tongue to be coupled with a buckle.

In EP 0 965 496 A1, a connecting structure of an inflatable belt and a tongue is described. The inflatable belt includes a bag and a mesh webbing enclosing the bag. One end of the inflatable belt is connected to a tongue. The tongue has an opening through which an end of the inflatable belt is passed and folded back so as to be superposed on the inflatable belt. The superposed portions are sewn together. A similar connecting structure of an inflatable belt and a tongue is described in EP 0 970 855 A1.

In a case that the airbelt is connected to the tongue, a tip end of the airbelt is outfitted on a cylindrical portion provided at a rear end of the tongue, and is tightened with a hose band from outside.

Instead of connecting the airbelt to the tongue to which the gas can be introduced, the airbelt is some times connected to a lap anchor having an inflator and the gas from the inflator is introduced into the airbelt.

Connecting strength of a connecting portion of the airbelt to the tongue or the lap anchor, and that of a connecting portion of the airbelt and the webbing connected with the stitching work is preferable to be formed as high as possible.

Consequently, in an object to provide the connected body of the airbelt and the anchor having a high connecting strength at these connecting portions, a connected body of the airbelt and the anchor is considered, in which the connected body of the airbelt and the anchor includes an airbelt composed of a bag and mesh webbing that covers the bag, and introduced of gas therein, and a tongue to which the tip end of the airbelt is connected, and an opening is provided at a rear end of the tongue, and the tip end of the airbelt is folded back and overlapped on the airbelt after the tip end of the aforementioned airbelt is inserted into the opening, and the portions of the airbelt overlapped with each other are stitched together.

### [Problems to be Solved by the Invention]

In this kind of hitherto proposed connected body of the airbelt and the anchor, not only the mesh webbing but also the bag is inserted into the opening of the tongue, and therefore the opening is required to have a large size by this extent.

An object of the present invention is to provide a connected body of an airbelt and an anchor capable of connecting the airbelt to the anchor even when a size of the opening of the tongue is reduced, and an airbelt apparatus using the connected body of the airbelt and the anchor.

### [Means for Solving the Problems]

According to the present invention, this object is achieved by a connected body of an airbelt and an anchor as defined in claim 1 or claim 4, and an airbelt apparatus as defined in claim 10. The dependent claims define preferred and advantageous embodiments of the invention.

A connected body of an airbelt and an anchor according to a first aspect of the invention is characterized in including: an airbelt including, a bag, and a mesh webbing covering the bag, in which the airbelt is expanded by gas introduced into the bag; and an anchor to which a tip end of the airbelt is connected, and an opening is provided in the anchor. The tip end of the airbelt is inserted into the opening and folded back to be overlapped on a base end side of the airbelt, and the tip end side and the base end side of the airbelt are stitched together. A tip end side of the mesh webbing extends out more than a tip end of the bag, and only the tip end side of the mesh webbing is inserted into the opening.

The connected body of the airbelt and the anchor is characterized in that the tip end portion of the mesh webbing situated nearer the tip end in relation to the opening is stitched on the bag and the mesh webbing together at the base end side of the airbelt.

The connected body of the airbelt and the anchor according to a first preferred embodiment is characterized in that the airbelt further includes a webbing whose one end is connected to rear end sides of the mesh webbing and the bag.

The connected body of the airbelt and the anchor according to a second preferred embodiment is characterized in that the rear end side of the mesh webbing extends out relatively longer toward the webbing in relation to the rear end side of the bag, and the mesh webbing is stitched on the webbing at a portion in the mesh webbing, which is spaced apart from the rear end side of the bag at a predetermined distance.

A connected body of an airbelt and an anchor according to a second aspect of the invention is characterized in including: an airbelt including a webbing, a bag following the webbing, and a mesh webbing covering the mesh webbing and the bag, in which the airbelt is expanded by gas introduced into the bag; and an anchor to which a tip end of the airbelt is connected and an opening is provided in the anchor. The tip end of the airbelt is inserted into the opening and folded back to be overlapped on a base end side of the airbelt, and the tip end side and the base end side of the airbelt are stitched together. Rear end sides of the mesh webbing and the bag are stitched on a middle portion in a longitudinal direction of the webbing together. Tip end sides of the webbing and the mesh webbing extend out more than a tip end of the bag. Only tip end sides of the webbing and the mesh webbing are inserted into the opening.

The connected body of the airbelt and the anchor according to the second aspect is characterized in that a tip end portion of the mesh webbing situated nearer the tip end in relation to the opening is stitched on the webbing, the bag and the mesh webbing together at the base end side of the airbelt.

The connected body of the airbelt and the anchor according to a third preferred embodiment is characterized in that the webbing extends through inside of the bag.

The connected body of the airbelt and the anchor according to a fourth preferred embodiment is characterized in that a rear end side of the mesh webbing extends out longer toward a rear end side of the webbing, in relation to a rear end side of the bag, and wherein the mesh webbing and the webbing are stitched together at a portion in the mesh webbing spaced apart from the rear end side of the bag at a predetermined distance.

The connected body of the airbelt and the anchor according to a fifth preferred embodiment is characterized in that a stitching work for the mesh webbing and the webbing is performed such that a seam of the stitching work substantially extends in a direction across a longitudinal direction of the mesh webbing.

The connected body of the airbelt and the anchor according to a sixth preferred embodiment is characterized in that a stitching work for the tip end side of the mesh webbing and the base end side of the airbelt is performed such that a seam of the stitching work substantially extends in the direction across the longitudinal direction of the mesh webbing.

The connected body of the airbelt and the anchor according to a seventh preferred embodiment is characterized in that the connected body of the airbelt and the anchor further includes a protecting cover for surrounding the airbelt.

An airbelt apparatus according to a third aspect of the invention is characterized in including the connected body of the airbelt and the anchor according to any one of the aspects and embodiments defined above, and a gas generator.

### [Advantages]

In a connected body of an airbelt and an anchor according to the first aspect of the invention, only mesh webbing is inserted into an opening of the anchor. Accordingly, the opening can be constructed to have a smaller size compared to a case that both the mesh webbing and a bag are inserted into the opening. Further, by forming the opening to have a smaller size, the anchor can also be formed to have a smaller size.

Incidentally, in the present invention, the anchor is provided for fastening an end portion of the airbelt, and the anchor may be either a lap anchor or a tongue.

In the connected body of the airbelt and the anchor according to the present invention, in a case that the bag is expanded, the mesh webbing that covers the bag is also expanded following the expansion of the bag. In the present invention, the mesh webbing is constructed with a knitted fabric that can be flexibly extended in a widening or an expanding direction but cannot be practically extended in a longitudinal direction. Accordingly, the mesh webbing becomes to have a small size in the longitudinal direction thereof when expanded, and to apply tension force to the airbelt.

In the connected body of the airbelt and the anchor according to the first aspect of the invention, stitching strength of a tip end portion of the mesh webbing to a base end side of the airbelt is relatively high.

As described in the first preferred embodiment, the airbelt in the present invention may have a construction in which one end of webbing formed from a belt material similar to an ordinary seatbelt, or the like is connected to a rear end side of the mesh webbing and the bag. In this case, by means of inserting the webbing into the anchor (for example, a tongue) at a rear end side of the airbelt, the opening of the anchor at the rear end side of the airbelt also becomes to be enabled to have a smaller size. As a result, the anchor at the rear end side of the airbelt can also be small sized.

In the construction according to the second preferred embodiment, the rear end side of the mesh webbing is extending out longer toward a webbing side in relation to the rear end side of the bag. Further, the mesh webbing is stitched on the webbing together at a portion in the mesh webbing spaced apart from the rear end side of the bag at a predetermined distance.

Incidentally, in a case that the bag is expanded, although the bag itself is contracted in a longitudinal direction thereof, usually, a contracting amount of the mesh webbing in a longitudinal direction at a time of expansion of the mesh webbing is brought to be greater than a contracting amount of the bag in the longitudinal direction at a time of expansion of the bag. Accordingly, in the construction according to the aforementioned embodiment, in a case that the bag and the mesh webbing are expanded together, the rear end side of the mesh webbing approaches the rear end side of the bag, because of a difference between the contracting amounts of both the bag and the mesh webbing. Consequently, a portion between each of the rear end side of the mesh webbing and the rear end side of the bag in the webbing is brought to a loose condition.

In general, when tension force is applied to an airbelt, and an expanded bag is stretched by the tension force, a thickness of the expanded bag is brought to have a small size. Accordingly, a thickness of mesh webbing extended along the expansion of the bag is also brought to have a small size. As a result, length of the mesh webbing becomes large, and the tension force applied to the airbelt from the mesh webbing becomes small.

In contrast, in the construction according to the aforementioned embodiment, in a condition in which both the bag and the mesh webbing are expanded, since a portion in the webbing between the rear end side of the mesh webbing and the rear end side of the bag is loosened, even when the tension force is applied to the airbelt, the tension force is not affected to the bag. Therefore, there is no possibility that the bag is stretched by the tension force. Consequently, the thickness of the expanded bag is prevented from being reduced, or suppressed to be reduced. As a result, the tension force applied to the airbelt from the mesh webbing is prevented from being reduced, or suppressed to be reduced.

In the connected body of the airbelt and the anchor according to the second aspect of the invention, since only the mesh webbing and the webbing are caused to be inserted into the opening of the anchor, the opening of the anchor becomes to be enabled to have a smaller size compared to a case in which the bag is inserted further.

In the connected body of the airbelt and the anchor according to the second aspect of the invention, stitching strength of the mesh webbing and webbing to a base end side of the airbelt is relatively high.

As described in the third preferred embodiment, the webbing may extend through inside of the bag.

In the construction according to the fourth preferred embodiment, the same operational advantage as that in the construction in the third preferred embodiment described above is obtained.

In general, a knitted fabric that constructs mesh webbing is knitted such that a plurality of pieces of knitting yarn line in a manner so as to be in parallel with a longitudinal direction of the mesh webbing, and that a distance between each of the pieces of knitting yarn can easily be expanded. Accordingly, when a stitching work for the mesh webbing and webbing, or the stitching work for a tip end side of the mesh webbing and a base end side of the aforementioned airbelt is performed in a manner such that a stitching thread is extended in a direction in parallel with a longitudinal direction of the mesh webbing, the stitching thread tends to get into between each of the pieces of knitting yarn. When the stitching thread thus gets into between each of the pieces of knitting yam, a width of the mesh webbing is increased by this extent, and a dimensional error occurs between a designed value and that of a real product.

Therefore, as described in the fifth and sixth preferred embodiment, it is preferable that the stitching work for the mesh webbing and the webbing, or the stitching work for the tip end side of the mesh webbing and the base end side of the aforementioned airbelt is performed such that the seam substantially extends in a direction across the longitudinal direction of the mesh webbing. By means of thus performing the stitching work for the mesh webbing, the stitching thread becomes hard to get into between each of the pieces of knitting yarn of the mesh webbing. As a result, the width of the actually manufactured mesh webbing is prevented from becoming larger or suppressed to become larger than that in the designed value.

Incidentally, in the present invention, the words "the seam substantially extends in a direction across the longitudinal direction of the mesh webbing" refers to that the seam extends in a direction orthogonal to the longitudinal direction of the mesh webbing, or that an angle of inclination of the seam with respect to the direction orthogonal to the longitudinal direction of the mesh webbing is 10° or less, specifically, 4° or less. However, in the present invention, when a part of the seam is 10% or less of an entire length of the seam, specifically, 4.7% or less, the part of the seam may also be partially extended in the longitudinal direction of the mesh webbing.

According to the connected body of the airbelt and the anchor claimed in the seventh preferred embodiment, the mesh webbing is protected by means of a protecting cover.

### [Brief Description of the Drawings]

Fig. 1(a) is an elevation showing a connected body of an airbelt and an anchor, and Fig. 1(b) is an elevation showing the connected body of the airbelt and the anchor in a condition in which a protecting cover is detached.
Fig. 2(a) is a back face view showing the connected body of the airbelt and the anchor, and Fig. 2(b) is a back face view showing the connected body of the airbelt and the anchor in a condition in which the protecting cover is detached.
Fig. 3(a) is an elevation showing the connected body of the airbelt and the anchor in a condition in which the protecting cover and the mesh webbing are detached, and Fig. 3(b) is an elevation showing a condition in which a bag is flatly developed in Fig. 3(a).
Fig. 4(a) is an elevation showing the connected body of the airbelt and the anchor with respect to another embodiment in a condition in which the protecting cover and the mesh webbing are removed, and Fig. 4(b) is an elevation showing a condition in which the bag is flatly developed in Fig. 4(a).
Fig. 5 is a back face view showing a condition in which the figure in Fig. 4(b) is reversed.
Fig. 6(a) is an elevation showing the connected body of the airbelt and the anchor with respect to still another embodiment in a condition in which the protecting cover and the mesh webbing are removed, and Fig. 6(b) is an elevation showing a condition in which a bag is expanded in Fig. 6(a), Fig. 6(c) is a view indicated by arrows C-C in Fig. 6(b).
Fig. 7 is a configuration view of the bag of the airbelt in Fig. 6.
Fig. 8(a) is an elevation of the connected body of an airbelt and an anchor with respect to still another embodiment in a condition in which the protecting cover and the mesh webbing are removed, and Fig. 8(b) is an elevation showing a condition in which a bag is expanded in Fig. 8(a).
Fig. 9 is an enlarged illustration showing a knitting structure of the mesh webbing.
Fig. 10 is a main part elevation showing a preferable example of a stitching method for the mesh webbing.

### [Best Mode for Carrying Out the Invention]

Hereinbelow, the embodiment will be explained referring to the drawings.

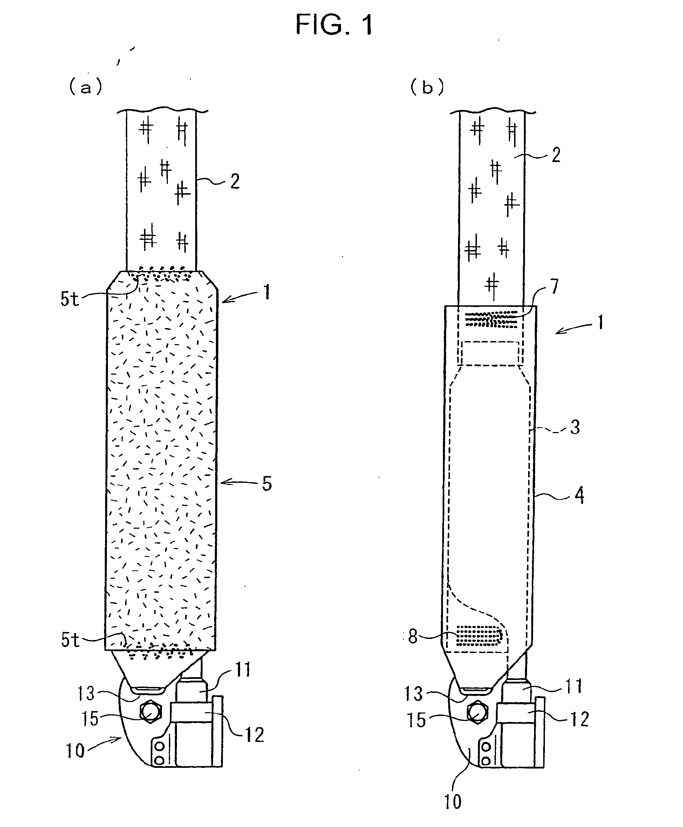

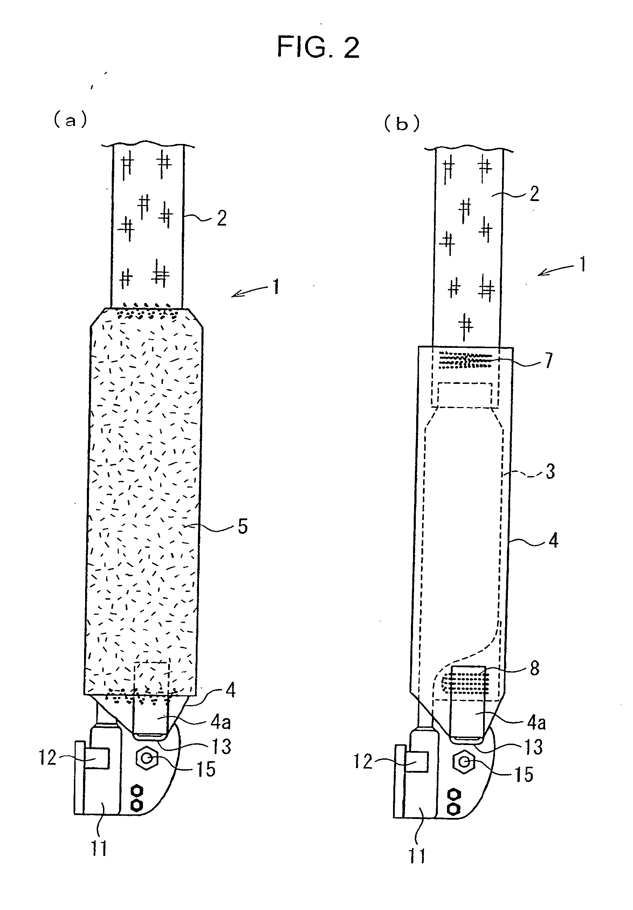

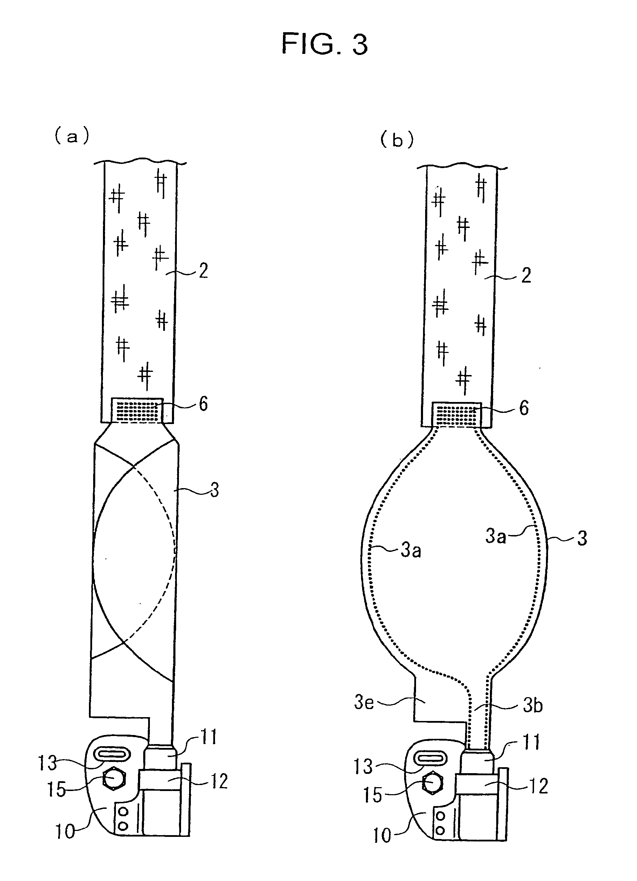

Figs. 1 through 3 are elevations showing a connected body of an airbelt and an anchor with respect to the embodiment, in which Fig. 1(a) is the elevation showing the connected body of the airbelt and the anchor, and Fig. 1(b) is an elevation showing a condition of the connected body of the airbelt and the anchor, from which a protecting cover is detached, Fig. 2(a) is a back face view showing the connected body of the airbelt and the anchor, and Fig. 2(b) is a back face view showing a condition of the connected body of the airbelt and the anchor, from which the protecting cover is detached, and Figs. 3(a) and 3(b) are elevations showing a condition of the connected body of the airbelt and the anchor, from which the protecting cover and mesh webbing are detached.

This connected body of the airbelt and the anchor is constructed by means of connecting the airbelt 1 to a lap anchor 10 serving as an anchor.

The airbelt 1 is provided with webbing 2 formed from a non-expansion type ordinary normal belt material, a bag 3 whose rear end side is stitched on a tip end of the webbing 2 with a seam 6 (refer to Fig. 3) together, mesh webbing 4 surrounding the bag 3, and a protecting cover 5 that covers approximately entire mesh webbing 4 and a tip end side of the webbing 2.

The bag 3 is a bag formed by means of overlapping a plurality of sheets of base cloth and stitching a peripheral edge portion of the same with a seam 3a to form a bag-like shape. A maximum width of the base cloth is greater than that of the webbing 2.

Most part of a seam 3a of the bag 3 is located along an outer peripheral edge of the bag 3. However, the seam 3a is separated from the outer peripheral edge at a tip end side of the bag 3. An extending-out piece portion 3e (refer to Fig. 3(b)) into which gas is not introduced is formed between the seam 3a and the tip end of the bag 3.

As shown in Fig. 3, the bag 3 is formed to have a belt-like shape in approximately the same width as that of the webbing 2 by means of folding back the both sides thereof. A gas-introducing inlet 3b formed at the tip end side of the bag 3 is connected to an inflator 11. The inflator 11 is fixed to the lap anchor 10 by means of a holding member 12. The gas-introducing inlet 3b is outfitted on, for example, a gas blowing outlet of the inflator 11, and is connected to the inflator 11 by tightening a band (not shown) from an outer periphery.

Incidentally, in this embodiment, when each of the base cloths constituting the bag 3 is stitched with a seam 3a together, the stitching work is performed in a manner such that a slight gas leak from between each of the base cloths is allowed. Further, a connecting structure of the gas-introducing inlet 3b and the inflator 11 is constructed in a manner such that the slight gas leak from between each of the base cloths is allowed. However, a venthole (not shown) may be provided in the bag 3 instead of thus causing the gas to leak from between each of the base cloths constituting the bag 3, or from the connecting portion of the gas-introducing inlet 3b and the inflator 11.

The mesh webbing 4 covers the belt-shaped folded-back bag. The mesh webbing 4 is constructed with a knitted fabric that can be flexibly extended in a widening or an expanding direction but cannot be practically extended in a longitudinal direction.

A rear end side of the mesh webbing 4 is stitched on a portion in the vicinity of the tip end of the webbing 2 with a seam 7 together. Incidentally, the aforementioned seam 6 is positioned at a leading edge portion of the webbing 2. The seam 7 is slightly spaced apart from the leading edge portion of the webbing 2.

A tip end side of the mesh webbing 4 serves as a thin width portion 4a (refer to Fig. 2). Only the thin width portion 4a is inserted into an opening 13 of the lap anchor 10 and folded back, and a tip end side of the thin width portion 4a is overlapped on a base end side of the mesh webbing 4, and stitched with a seam 8 together. Incidentally, the base end side refers to a portion situated nearer a bag 3 side in relation to the opening 13. The position where the tip end side of the thin width portion 4a is overlapped is a portion of the extending-out piece portion 3e of the aforementioned bag 3. The thin width portion 4a is stitched on the base end side of the mesh webbing 4 and the extending-out piece portion 3e with a seam 8 together.

Incidentally, as clearly shown in Fig. 3, the extending-out piece portion 3e is slightly spaced apart from the lap anchor 10, and the bag 3 is not inserted into the opening 13. Only the thin width portion 4a of the mesh webbing 4 is inserted into the opening 13.

The protecting cover 5 is a cover formed from a sheet-shaped material into a cylindrical shape by being stitched with a tear seam (not shown) after folding back the sheet-shaped material having a thin long rectangular shape. The tear seam is provided with strength in an extent of being torn when the bag 3 is expanded.

The protecting cover 5 is extending in an area from the tip end of the webbing 2 to a position closest to the lap anchor 10. A rear end side of the protecting cover 5 is covering the seam 7 and the rear end side thereof is stitched on the webbing 2 with a tear seam 5t together. A tip end side of the protecting cover 5 is covering the seam 8, however is slightly spaced apart from the lap anchor 10. The tip end side of the protecting cover 5 is stitched on the mesh webbing 4 with the tear seam 5t together. The tear seam 5t is also provided with the strength in an extent of being torn when the bag 3 is expanded.

A lap airbelt 1 is an airbelt that is pulled around along an abdominal area of an occupant seated in an automobile seat. The lap anchor 10 is attached to a seat side frame (illustration is omitted) by means of a holding-on cramp 15 such as a bolt or the like.

Although not shown, in the middle of the webbing 2, a tongue similar to that in an ordinary seatbelt apparatus is inserted. A rear end side of the webbing 2 is retractably connected to the seatbelt retractor, after passing through a shoulder anchor.

In this embodiment, since only the mesh webbing 4 is inserted into the opening 13 of the lap anchor 10 as described above, the opening 13 can be designed to have a smaller size compared to a case that both the mesh webbing 4 and the bag 3 are inserted into the opening 13. Similarly, the lap anchor 10 can be designed to have a smaller size by this extent.

When an automobile on which the airbelt apparatus constructed as described above is mounted encounters a collision, the inflator 11 is activated to blow out the gas, and the bag 3 is expanded resulting in restraining of the occupant. The bag 3 is brought to have a relatively short length when expanded. Further, the mesh webbing 4 is also expanded along with the expansion of the bag 3. However, the mesh webbing 4 is also brought to have a relatively short length along with the expansion thereof. This is because the mesh webbing 4 is constructed with a knitted fabric that can be flexibly extended in a widening or an expanding direction but cannot be practically extended in a longitudinal direction. As a result, tension force is applied to the webbing 2 and an occupant is restrained on a seat. Further, at this moment, a shock applied to the occupant is absorbed by means of leaking of the gas from between each of the base cloths constituting the bag 3, or from the connecting portion of the gas-introducing inlet 3b and the inflator 11.

In this lap airbelt 1, since the bag 3 is wrapped up by the mesh webbing 4, compression strength of the bag 3 at the time of expansion is high by this extent. Further, since the length of the mesh webbing 4 is shortened in addition to that the length of the bag 3 itself is brought to be relatively short when the bag 3 is expanded, tension force can effectively be applied to the lap airbelt 1.

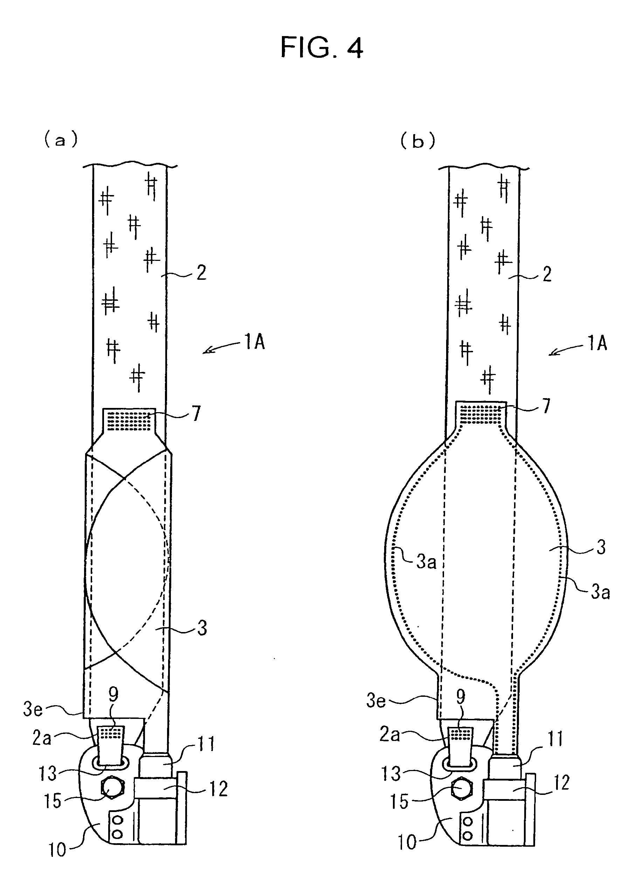

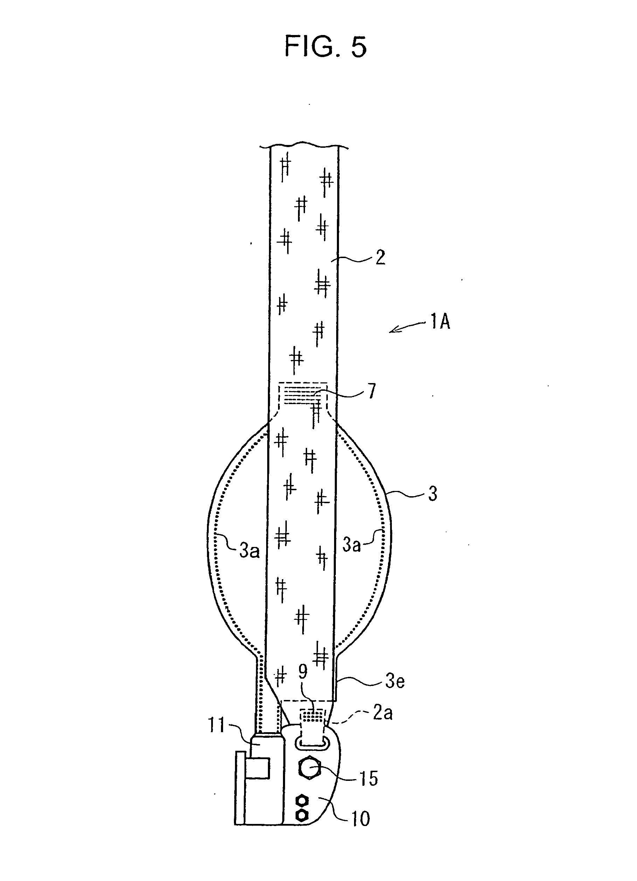

Another embodiment will be explained referring to Figs. 4 and 5.

Fig. 4(a) is an elevation showing a condition of a connected body of an airbelt and an anchor with respect to another embodiment, from which a protecting cover and a mesh webbing are removed, Fig. 4(b) is an elevation showing a condition in which a bag is developed in Fig. 4(a), and Fig. 5 is a back face view showing a condition in which the figure in Fig. 4(b) is reversed.

In the embodiment shown in Figs. 1 though 3, only the mesh webbing 4 is inserted into the opening 13 of the lap anchor 10, however the embodiment shown in Figs. 4 and 5 is configured that the mesh webbing 4 and the webbing 2 are inserted into the opening 13.

In a lap airbelt 1A in this embodiment, the webbing 2 is also extended up to the lap anchor 10, and the bag 3 is disposed in the middle in an extending direction of the webbing 2. That is, the webbing 2 is extended in a manner so as to be overlapped on the bag 3, and a tip end portion 2a of the webbing 2 is extended out from a tip end of the bag 3. The tip end portion 2a of the webbing 2 is formed to have a thin width shape so that the tip end portion 2a can be inserted into the opening 13, and is extended up to a leading edge of the mesh webbing 4. The tip end portion 2a of the webbing 2 is inserted into the opening 13 and folded back, and is stitched on a base end side of the webbing 2 with a seam 9 together.

Although not shown, a tip end portion 4a of the mesh webbing 4 is also inserted into the opening 13 in the same manner as that shown in Figs. 1 through 3, and stitched on the base end side of the mesh webbing 4 with the seam 8 together. A stitching position of the seam 8 is the same as that in the aforementioned embodiment, and the extending-out portion 3e of the bag 3, the webbing 2, and the mesh webbing 4 are stitched with the seam 8 together. Although not shown, in this embodiment, the protecting cover 5 is also mounted on in the same manner as that shown in Figs. 1 and 2.

The construction other than that in this embodiment is the same as that in the embodiment shown in Figs. 1 through 3, and the same numeral in Figs. 4 and 5 as that in Figs. 1 through 3 denotes the same element.

In this embodiment, since only the mesh webbing 4 and the webbing 2 are inserted into the opening 13, the opening 13 can be designed to have a smaller size compared to the case that the mesh webbing 4, the webbing 2, and the bag 3 are inserted into the opening 13, and the lap anchor 10 can also be designed to have a smaller size.

In the lap airbelt 1A in this embodiment, the bag 3 is also wrapped up by means of the mesh webbing 4, and therefore the compression strength of the bag 3 at the time of expansion is high by this extent. Further, since the length of the mesh webbing 4 is brought to be relatively short in addition to that the length of this bag 3 itself is brought to be relatively short when the bag 3 is expanded, the tension force can effectively be applied to the lap airbelt 1A.

In the lap airbelt 1A in this embodiment, when the inflator 11 is activated to blow out the gas and the bag 3 is expanded, the length of this bag 3 itself and the length of the mesh webbing 4 that is expanded along the expansion of this bag 3 are also brought to be relatively short, and the tension force is generated in the webbing 2. Incidentally, at this moment, a portion between the seams, 7 and 8, in the webbing 2 is shortened by the bag 3 and the mesh webbing 4, in which the lengths thereof are brought to be short by the expansion, and is brought to a loose condition.

When the lap airbelt 1A restrains a movement of the occupant, tension force works on the lap airbelt 1A, and the bag 3 and the mesh webbing 4 are stretched by the tension force. Along with this operation, a distance between the seams, 7 and 8, is being extended, and finally, the looseness of the portion between the seams, 7 and 8, in the webbing 2 is removed. As a result, the lap airbelt 1A (the bag 3 and the mesh webbing 4) is stopped to be extended further.

Incidentally, in the lap airbelt 1A, the shock applied to the occupant is also absorbed by means of the leaking of the gas from the stitching portion of each of the base cloths of the bag 3, and the connecting portion of the gas-introducing inlet 3b and the inflator 11.

In a case that the tip end side of the webbing 2 is connected to a rear end side of the bag 3 and the mesh webbing 4, internal pressure of the bag 3 is required to be raised so that the lap airbelt 1A is prevented from being extended or suppressed to be extended by a predetermined length or more, when the occupant is restrained. In contrast, in the lap airbelt 1A in which the tip end side of the webbing 2 is connected to the lap anchor 10, the webbing 2 is brought to a strained condition (a condition being stretched without looseness) even when the internal pressure of the bag 3 at a time of the expansion is relatively low. Therefore, the lap airbelt 1A is limited to be extended by a predetermined length or more. Accordingly, the internal pressure of the bag 3 at the time of expansion can be set to be relatively low. Further, as a result, an inflator having relatively low output can be adopted as the inflator 11.

In addition, when the webbing 2 is brought to be in the strained condition, the lap airbelt 1A becomes to oppose the tension force by the webbing 2. Accordingly, it is sufficient that the required strength of the seams, 6 through 9, which stitch the bag 3 and the mesh webbing 4 on the webbing 2 is low, compared to the case that the tip end side of the webbing 2 is connected to the rear end side of the bag 3 and the mesh webbing 4. Therefore, the stitching work for the bag 3 and the mesh webbing 4 on the webbing 2 can also be simplified.

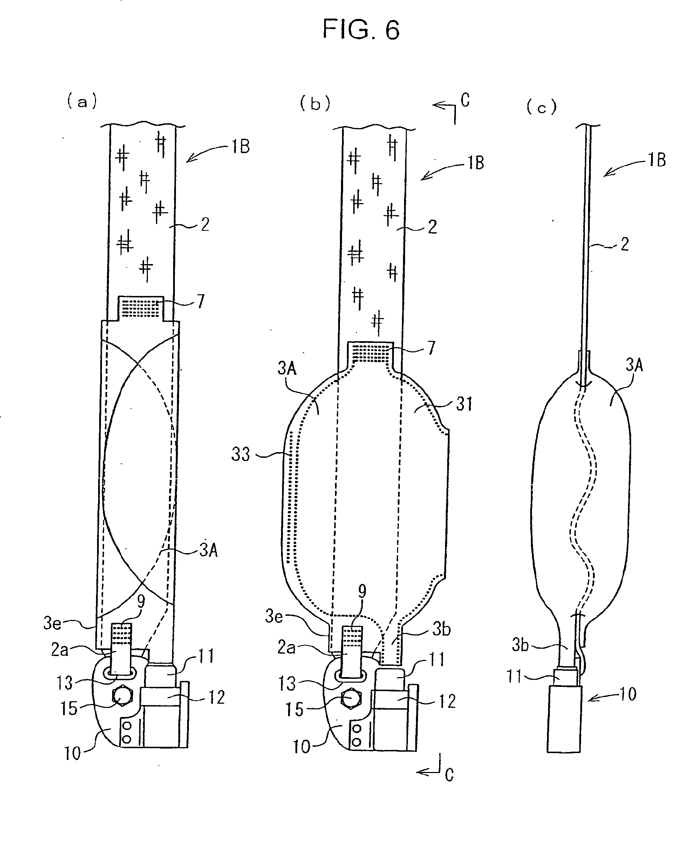

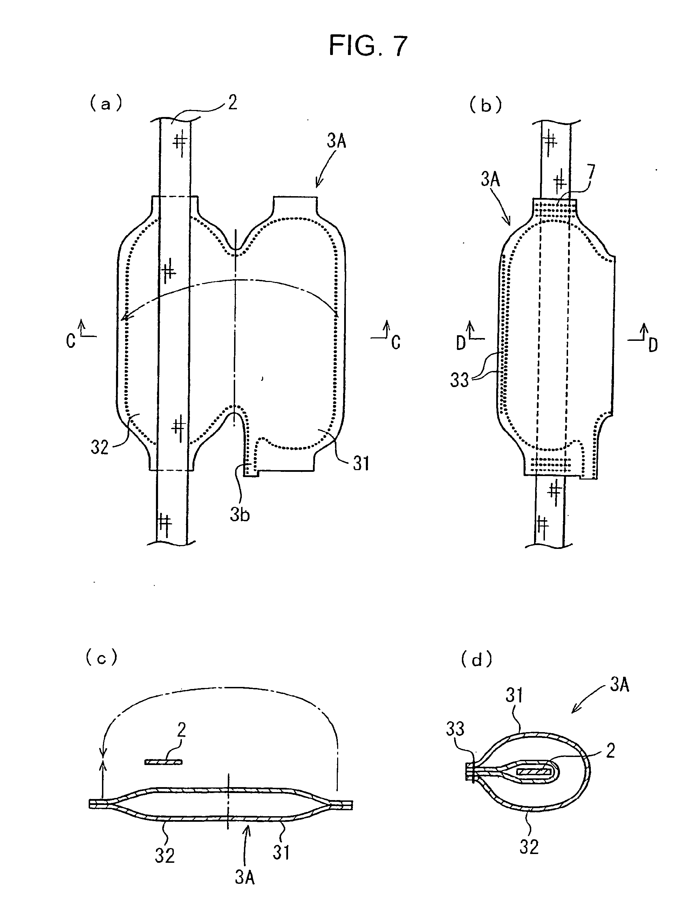

Fig. 6(a) is an elevation showing a condition of a connected body of an airbelt and an anchor with respect to still another embodiment, from which a protecting cover and a mesh webbing are removed, Fig. 6(b) is an elevation showing a condition in which a bag is expanded in Fig. 6(a), Fig. 6(c) is a view indicated by arrows C-C in Fig. 6(b), and Figs. 7(a) through 7(d) are plan views and cross-sections showing a construction of the bag. Incidentally, Fig. 7(a) is showing a condition of the bag that is flatly expanded, Fig. 7(b) is showing a condition of the bag attached in a manner so as to surround both the webbing at an occupant side and the webbing at a side opposite to the occupant, Fig. 7(c) is a cross-section taken along C-C line in Figs. 7(a), and 7(d) is a cross-section taken along D-D line in Fig. 7(b).

A lap airbelt 1B in this embodiment is constructed such that a bag 3A for continuously surrounding the webbing 2 from an occupant side to a side opposite to the occupant is provided in the lap airbelt 1A in Figs. 4 and 5.

The bag 3A is provided with an occupant-side disposition portion 31 disposed at the occupant side of the webbing 2 and an opposite-side disposition portion 32 disposed at a side opposite to the occupant side of the webbing 2. Incidentally, as shown in Fig. 7(a), in this embodiment, the occupant-side disposition portion 31 has a construction similar to that of the bag 3 in the above-described each embodiment, and the opposite-side disposition portion 32 has a construction such as that the gas-introducing inlet 3b is omitted from the construction of the occupant-side disposition portion 31. Further, as shown in the drawings, the occupant-side disposition portion 31 and the opposite-side disposition portion 32 are integrally formed via an intermediate portion (numeral is omitted) that connects each of one side edge of the portions thereof described above, and are allowed to communicate with each other via the intermediate portion.

When the bag 3A is attached to the webbing 2, as shown in Figs. 7(a) and 7(c), through Figs. 7(b) and 7(d), the bag 3A is folded in folio at a portion between the occupant-side disposition portion 31 and the opposite-side disposition portion 32 (the aforementioned intermediate portion) from a flatly developed condition. The webbing 2 is sandwiched between the occupant-side disposition portion 31 and the opposite-side disposition portion 32, and each of the facing edges of the occupant-side disposition portion 31 and the opposite-side disposition portion 32 is stitched with a seam 33 together. Then, each of rear end sides of the occupant-side disposition portion 31 and the opposite-side disposition portion 32 is stitched on the webbing 2 with the seam 7 together. Thus, the bag 3A is formed to have a cylindrical shape, and the webbing 2 is configured to be pulled through inside of the bag 3.

Incidentally, in this embodiment, when the tip end portion 2a of the webbing 2 is inserted into the opening 13 of the lap anchor 10 and folded back, and stitched on the base end side of the webbing 2 with the seam 9 together, the extending-out portion 3e at a tip end side of the bag 3A (occupant side disposition portion 31) is also stitched together.

As shown in Fig. 6(a), the bag 3A is formed to have a belt like shape in approximately the same width as that of the webbing 2, while both sides of the bag 3A are folded back. Further, although the illustration is omitted, the mesh webbing 4 is mounted in a manner so as to wrap an entire periphery of the bag 3A.

A construction other than that in this embodiment is the same as that in the embodiment shown in the above-described embodiment, and the same numeral in Figs. 6 and 7 denotes the same element in Figs. 4 and 5.

In this lap airbelt 1B, since the bag 3A is continuously expanded from the occupant side of the webbing 2 to the side opposite to the occupant side of the webbing 2, an occupant-protecting effect is high.

It is natural to say that in the lap airbelt 1B, the same operational advantage as that of the aforementioned lap airbelt 1A, shown in Figs. 4 and 5, is also obtained.

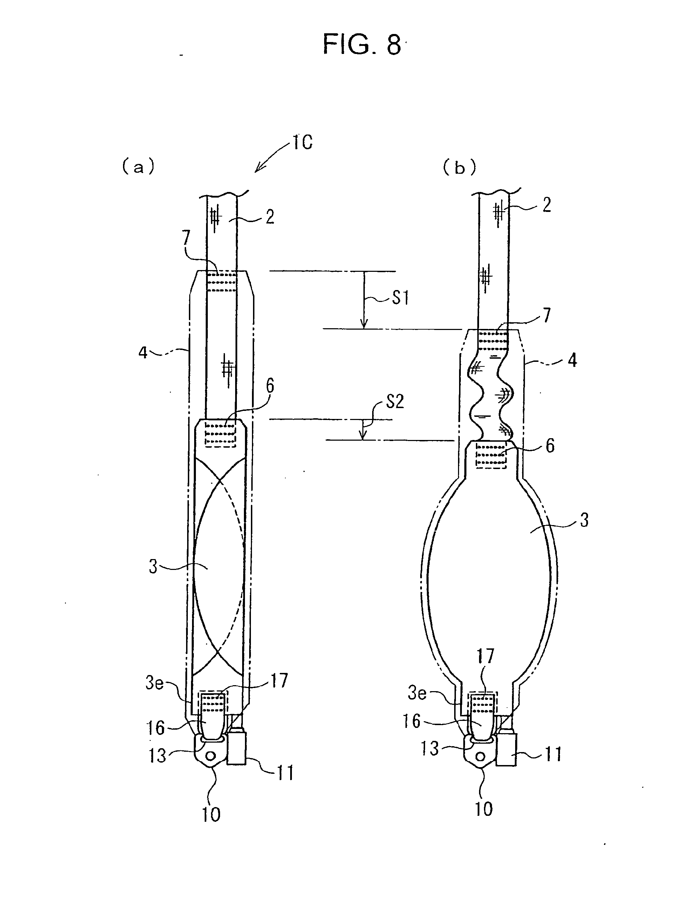

Fig. 8(a) is an elevation showing a connected body of an airbelt and an anchor with respect to still a further embodiment in a condition where a protecting cover and mesh webbing are removed, and Fig. 8(b) is an elevation showing a condition in which a bag is expanded in Fig. 8(a).

In a lap airbelt 1C in this embodiment, the tip end side of the webbing 2 is stitched on the rear end side of the bag 3 with the seam 6 together, and at the tip end side of the bag 3 (extending-out portion 3e), a rear end side of a combining webbing 16 for combining the bag 3 with the lap anchor 10 is stitched together.

The combining webbing 16 is formed from a belt material constituting an ordinary seatbelt similar to the webbing 2. A tip end side of the combining webbing 16 is extending up to the leading edge of the mesh webbing 4. The tip end side of the combining webbing 16 is inserted into the opening 13 of the lap anchor 10 and folded back, and stitched on a base end side of the combining webbing 16 with a seam 17 together.

In this embodiment, the rear end side of the mesh webbing 4 that wraps the bag 3 is extended out longer toward the rear end side of the webbing 2 in relation to a rear end of the bag 3 (seam 6). At a portion in the mesh webbing 4, which is spaced apart from a rear end of the bag 3 (seam 6) at a predetermined distance, the mesh webbing 4 and the webbing 2 are stitched with the seam 7 together.

Although a detailed illustration is omitted, the tip end side of the mesh webbing 4 is inserted into the opening 13 of the lap anchor 10, and stitched on the base end side of the mesh webbing 4 in the same manner as that in each of the above-described embodiment. The stitching position is also the same as that in each of the above-described embodiments.

A construction other than that of this embodiment is the same as that in the embodiment shown in Figs. 1 through 3, and the same numeral in Fig. 8 denotes the same element in Figs. 1 through 3.

In this embodiment, since only the mesh webbing 4 and the combining webbing 16 are also inserted into the opening 13, the opening 13 can be designed to have a relatively small shape, and the lap anchor 10 can also be designed to have a small shape.

Hereinbelow, operation of the lap airbelt 1C in this embodiment will be explained.

As described above, the mesh webbing 4 is constructed with a knitted fabric that can be flexibly extended in a widening or an expanding direction but cannot be practically extended in a longitudinal direction. Accordingly, the mesh webbing 4 is brought to have a reduced size in a longitudinal direction when expanded along with the expansion of the bag 3, and is brought to apply tension force to the lap airbelt 1C.

At this moment, although the bag 3 itself contracts in a longitudinal direction when expanded, a contracting amount S₁ in a longitudinal direction of the mesh webbing 4 at the time of expansion is brought to be greater than a contracting amount S₂ in a longitudinal direction of the bag 3 at the time of expansion. In this lap airbelt 1C, since the rear end side of the mesh webbing 4 (seam 7) is stitched on the webbing 2 together, while being spaced apart from the rear end of the bag 3 (seam 6) at the predetermined distance, as shown in Fig. 8(b), in a case that the bag 3 and the mesh webbing 4 are expanded, the rear end of the mesh webbing 4 approaches the rear end of the bag 3 because of a difference between the contracting amounts, S₁ and S₂. Consequently, a portion between each of the seams, 6 and 7, in the webbing 2 is brought to a loose condition.

In general, when the expanded bag 3 is stretched by tension force applied to a lap airbelt, a thickness of the expanded bag 3 is reduced. Accordingly, the thickness of the expanded mesh webbing 4 is also reduced along with the expansion of the bag 3. As a result, a length of the mesh webbing 4 is increased and the tension force applied to the lap airbelt from the mesh webbing 4 is reduced.

In contrast, in the lap airbelt 1C in this embodiment, in a condition that the bag 3 and the mesh webbing 4 are expanded, since the portion between the rear end side of the mesh webbing 4 (seam 7) and the rear end side of the bag 3 (seam 6) in the webbing 2 is loosened, the tension force is not affected to the bag 3, even when the tension force is applied to the airbelt 1C, and there is no possibility that the bag 3 is stretched by the tension force. Accordingly, the thickness of the expanded bag 3 is prevented from being reduced, or suppressed to be reduced. As a result, the tension force applied to the lap airbelt 1C from the mesh webbing 4 is prevented from being reduced, or suppressed to be reduced.

Incidentally, in this lap airbelt 1C, the same operational advantage as that of the above-described lap airbelt 1 in Figs. 1 through 3 is obtained.

Although the tip side of the webbing 2 is connected to the rear end side of the bag 3 in this lap airbelt 1C, the webbing 2 may be extended up to the lap anchor 10, and the tip end side of the webbing 2 may be inserted into the opening 13 of the lap anchor 10 as the lap airbelt 1A shown in Figs. 4 and 5.

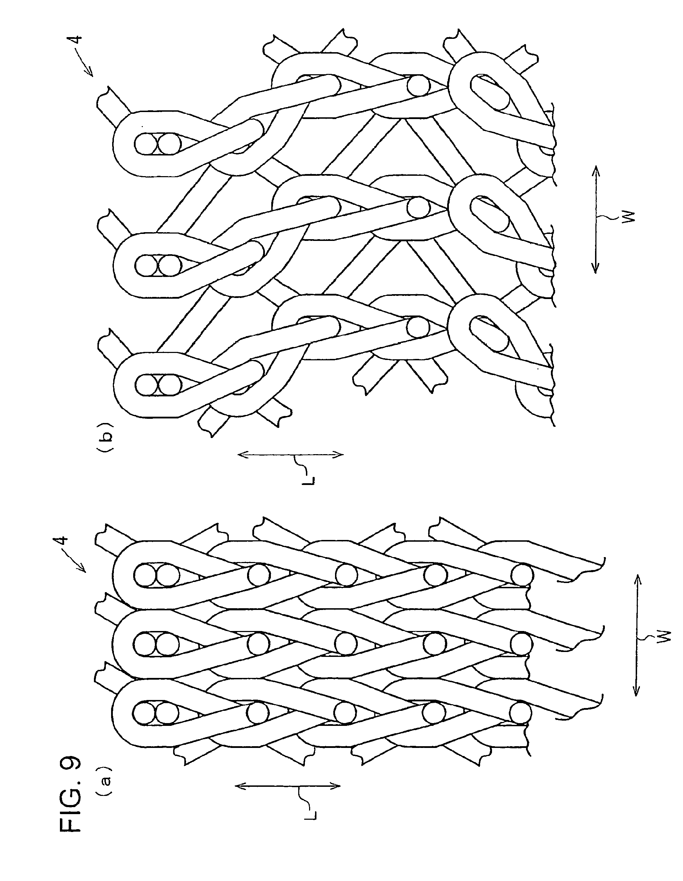

As described above, the mesh webbing 4 is constructed with a knitted fabric that can be flexibly extended in a widening or an expanding direction but cannot be practically extended in a longitudinal direction. An enlarged illustration of a knitting structure of the mesh webbing 4 is shown in Fig. 9. Incidentally, Fig. 9(a) illustrates a condition in which the mesh webbing 4 is not extended in a width direction (peripheral direction), (namely, non-expanding condition of the bag), and Fig. 9(b) illustrates a condition in which the mesh webbing 4 is extended in the width direction (namely, expanding condition of the bag). In Fig. 9, a mark L denotes a longitudinal direction of the mesh webbing 4, and a mark W denotes a width direction (peripheral direction) of the mesh webbing 4.

The mesh webbing 4 is generally constructed with a knitted fabric having a knitting structure called denby structure, as shown in Fig. 9. This knitted fabric is knitted such that a plurality of pieces of knitting yarn line in a manner so as to be approximately in parallel with a longitudinal direction L of the mesh webbing 4, and that a distance between each of the pieces of the knitting yarn can easily be expanded, as shown in Figs. 9(a) and 9(b). Accordingly, when a stitching work for the mesh webbing 4 and other material (for example, webbing 2, or the like) is performed such that the seam thereof extends in a direction in parallel with the longitudinal direction of the mesh webbing 4, a stitching thread easily gets into between each of the pieces of knitting yarn. When the stitching thread gets into between each of the pieces of knitting yarn as described above, a width of the mesh webbing 4 is increased by this extent, and a dimensional error occurs between a designed value and that of a real product.

Accordingly, the stitching work for the mesh webbing 4 and the other member is preferable to be performed such that the seam substantially extends in a direction across the longitudinal direction of the mesh webbing 4. By performing the stitching work for the mesh webbing 4 as described above, the stitching thread becomes hard to get into between each of the pieces of knitting yarn of the mesh webbing 4. Thereby, the width of the actually manufactured mesh webbing 4 is prevented from becoming larger or suppressed to become larger than that in the designed value.

Incidentally, in the present invention, the words "the seam substantially extends in a direction across that of the mesh webbing 4" refers to that the seam extends in a direction orthogonal to the longitudinal direction of the mesh webbing 4, or that an angle of inclination of the seam with respect to the direction orthogonal to the longitudinal direction of the mesh webbing 4 is 10° or less, specifically, 4° or less. However, in the present invention, when a part of the seam is 10% or less of an entire length of the seam, specifically, 4.7% or less, the part of the seam may also be partially extended in the longitudinal direction of the mesh webbing 4.

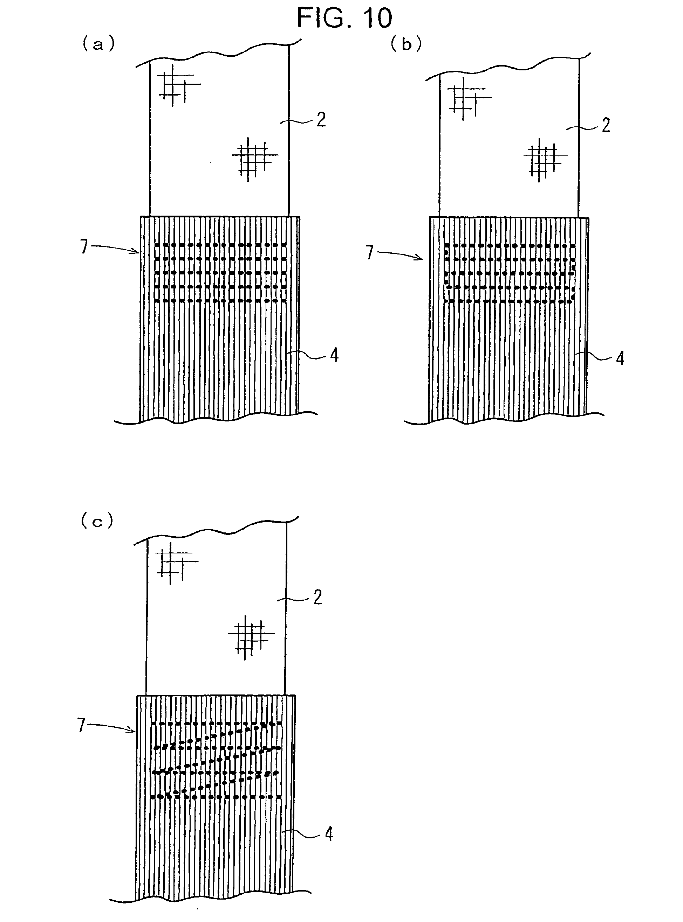

In Figs. 10(a) and 10(b), the embodiment of the stitching method described above is shown. Incidentally, any of Figs. 10(a) through 10(c) is illustrating the seam 7 for stitching the rear end side of the mesh webbing 4 and the webbing 2 together.

In Fig. 10(a), the mesh webbing 4 is stitched on the webbing 2 together by means of extending a plurality of ridges of the seam 7 in a direction substantially orthogonal to the longitudinal direction of the mesh webbing 4 in parallel with each other.

In Fig. 10(b), the seam 7 is formed to be extending in a manner so as to reciprocate for a plurality of times in the direction substantially orthogonal to the longitudinal direction of the mesh webbing 4. Incidentally, in this embodiment, the seam 7 is formed to be reciprocating in a manner so as to be folded back in approximately C-shaped manner at one end side in the direction substantially orthogonal to the longitudinal direction of the mesh webbing 4. However, a length of the seam 7 extending in the longitudinal direction of the mesh webbing 4 at this folding-back point is the length of a small degree, and the width of the mesh webbing 4 is not practically or substantially enlarged at all.

In Fig. 10(c), the seam 7 is extending in a zigzag manner (z-shape) in a direction substantially orthogonal to the longitudinal direction of the mesh webbing 4, and in an inclining direction relative to the longitudinal direction of the mesh webbing 4.

Incidentally, any of the above-described stitching methods is an example, and the stitching method for the mesh webbing 4 is not limited thereto. Further, although it is natural to say, it is preferable that the seams other than the seam 7 are also extending in a direction across the longitudinal direction of the mesh webbing 4 as described above.

The aforementioned embodiment is an example of the present invention, and the present invention is not limited thereto. For example, it is clear that the shape and the folding back configuration of the bag 3 may also be that other than illustrated.

Although the lap airbelt is connected to the lap anchor in the aforementioned embodiment, the lap airbelt may be connected to the tongue that serves as an anchor in a similar manner as that of the aforementioned embodiment, and a gas-introducing inlet may be provided in a tongue as described in the aforementioned Unexamined Japanese Patent Application Publication No. 2001-260807.

Further, the airbelt is not limited to be the lap airbelt, but the airbelt may be a shoulder airbelt, and in this case, the shoulder airbelt may also be connected to a tongue, as described in the Unexamined Japanese Patent Application Publication No. 2001-260807.

## Claims

1. A connected body of an airbelt (1; 1C) and an anchor (10), comprising:
an airbelt (1;1C) comprising,
a bag (3);
a mesh webbing (4) covering the bag (3), wherein the mesh webbing (4) is constructed with a knitted fabric that can be flexibly extended in a widening direction but cannot be practically extended in a longitudinal direction; and
an anchor (10) to which a tip end of the airbelt (1;1C) is connected, wherein an opening (13) is provided in the anchor (10), and the tip end of the airbelt (1;1C) is inserted into the opening (13) and folded back to be overlapped on a base end side of the airbelt (1;1C), and the tip end side and the base end side of the airbelt (1;1C) are stitched together;
wherein the airbelt (1;1C) is expanded by gas introduced into the bag (3);
**characterized in that**
a tip end side of the mesh webbing (4) extends out more than a tip end of the bag (3), **in that**
the tip end side of only the mesh webbing (4) is inserted into the opening, and **in that**
the tip end portion of the mesh webbing (4) situated nearer the tip end in relation to the opening (13) is stitched on the bag (3) and the mesh webbing (4) together at the base end side of the airbelt (1;1C).

2. The connected body of the airbelt (1;1C) and the anchor (10) according to Claim 1, wherein the airbelt (1;1C) further includes a webbing (2) whose one end is connected to rear end sides of the mesh webbing (4) and the bag (3).

3. The connected body of the airbelt (1;1C) and the anchor (10) according to Claim 2, wherein the rear end side of the mesh webbing (4) extends out relatively longer toward the webbing (2) in relation to the rear end side of the bag (3), and the mesh webbing (4) is stitched on the webbing (2) at a portion in the mesh webbing (4), which is spaced apart from the rear end side of the bag (3) at a predetermined distance.

4. A connected body of an airbelt (1A; 1B; 1C) and an anchor (10), comprising:
an airbelt (1A; 1B; 1C) comprising,
a webbing (2);
a bag (3; 3A) following the webbing (2),
a mesh webbing (4) covering the webbing (2) and the bag (3; 3A); wherein the mesh webbing (4) is constructed with a knitted fabric that can be flexibly extended in a widening direction but cannot be practically extended in a longitudinal direction; and
an anchor (10) to which a tip end of the airbelt (1A; 1B; 1C) is connected,
wherein an opening (13) is provided in the anchor (10), and the tip end of the airbelt (1A; 1B; 1C) is inserted into the opening (13) and folded back to be overlapped on a base end side of the airbelt (1A; 1B; 1C), and the tip end side and the base end side of the airbelt (1A; 1B; 1C) are stitched together,
wherein the airbelt (1A; 1B; 1C) is expanded by gas introduced into the bag (3, 3A);
wherein rear end sides of the mesh webbing (4) and the bag (3; 3A) are stitched on a middle portion in a longitudinal direction of the webbing together;
wherein tip end sides of the webbing (2) and the mesh webbing (4) extend out more than a tip end of the bag (3);
wherein the tip end sides of only the webbing (2) and the mesh webbing (4) are inserted into the opening (13); and
wherein a tip end portion of the mesh webbing (4) situated nearer the tip end in relation to the opening (13) is stitched on the webbing (2), the bag (3; 3A) and the mesh webbing (4) together at the base end side of the airbelt (1A; 1B; 1C).

5. The connected body of the airbelt (1B) and the anchor (10) according to Claim 4,
wherein the webbing (2) extends through inside of the bag (3A).

6. The connected body of the airbelt (1A; 1B; 1C) and the anchor (10) according to Claim 4 or 5, wherein a rear end side of the mesh webbing (4) extends out longer toward a rear end side of the webbing (2) in relation to a rear end side of the bag (3; 3A), and wherein the mesh webbing (4) and the webbing (2) are stitched together at a portion in the mesh webbing (4) spaced apart from the rear end side of the bag (3; 3A) at a predetermined distance.

7. The connected body of the airbelt (1; 1A; 1B; 1C) and the anchor (10) according to any one of Claims 2 through 6, wherein a stitching work for the mesh webbing (4) and the webbing (2) is performed such that a seam (7) of the stitching work substantially extends in a direction across a longitudinal direction of the mesh webbing (4).

8. The connected body of the airbelt (1; 1A; 1B; 1C) and the anchor (10) according to any one of Claims 1 through 7, wherein a stitching work for the tip end side of the mesh webbing (4) and the base end side of the airbelt (1; 1A; 1B; 1C) is performed such that a seam (8) of the stitching work substantially extends in the direction across the longitudinal direction of the mesh webbing (4).

9. The connected body of the airbelt (1; 1A; 1B; 1C) and the anchor (10) according to any one of Claims 1 through 8 further comprising a protecting cover (5) for surrounding the airbelt (1; 1A; 1B; 1C).

10. An airbelt apparatus, comprising:
the connected body of the airbelt (1; 1 A; 1B; 1C) and the anchor (10) according to any one of Claims 1 through 9; and
a gas generator (11).

## Patentansprüche

1. Verbindungskörper eines Gurtairbags (1; 1C) und eines Halters (10), umfassend:
einen Gurtairbag (1; 1C), umfassend
einen Airbag (3);
ein Maschengurtbandgewebe (4), welches den Airbag (3) überdeckt, wobei das Maschengurtbandgewebe (4) aus einem Gewirke konstruiert ist, welches flexibel in eine Breitenrichtung, aber praktisch nicht in eine Längsrichtung ausgedehnt werden kann; und
den Halter (10), mit welchem ein Ende des Gurtairbags (1; 1C) verbunden ist, wobei eine Öffnung (13) in dem Halter (10) vorhanden ist und wobei das Ende des Gurtairbags (1; 1C) in die Öffnung (13) eingeführt und derart zurückgefaltet ist, dass es eine Basisendseite des Gurtairbags (1; 1C) überlappt, und wobei das Ende und die Basisendseite des Gurtairbags (1; 1C) zusammengenäht sind;
wobei der Gurtairbag (1; 1C) durch ein Gas, welches in den Airbag (3) eingeführt wird, ausgedehnt wird;
**dadurch gekennzeichnet,**
**dass** sich eine Endseite des Maschengurtbandgewebes (4) mehr nach außen erstreckt als ein Ende des Airbags (3),
**dass** nur die Endseite des Maschengurtbandgewebes (4) in die Öffnung eingeführt ist, und
**dass** der Endabschnitt des Maschengurtbandgewebes (4), welcher dem Ende bezüglich der Öffnung (13) näher liegt, an der Basisendseite des Gurtairbags (1; 1 C) auf den Airbag (3) und das Maschengurtbandgewebe (4) zusammengenäht ist.

2. Verbindungskörper des Gurtairbags (1; 1C) und des Halters (10) nach Anspruch 1, **dadurch gekennzeichnet, dass** der Gurtairbag (1; 1C) darüber hinaus ein Gurtbandgewebe (2) umfasst, dessen eines Ende mit einer hinteren Endseite des Maschengurtbandgewebes (4) und des Airbags (3) verbunden ist.

3. Verbindungskörper des Gurtairbags (1; 1C) und des Halters (10) nach Anspruch 2, **dadurch gekennzeichnet, dass** sich die hintere Endseite des Maschengurtbandgewebes (4) relativ länger bezüglich der hinteren Endseite des Airbags (3) zu dem Gurtbandgewebe (2) erstreckt, und dass das Maschengurtbandgewebe (4) an einem Abschnitt in dem Maschengurtbandgewebe (4) auf das Gurtbandgewebe (2) genäht ist, welcher mit einem vorbestimmten Abstand von der hinteren Endseite des Airbags (3) beabstandet ist.

4. Verbindungskörper eines Gurtairbags (1A; 1B; 1 C) und eines Halters (10), umfassend:
einen Gurtairbag (1A; 1 B; 1 C), umfassend
ein Gurtbandgewebe (2);
einen Airbag (3; 3A), welcher dem Gurtbandgewebe (2) nachfolgt,
ein Maschengurtbandgewebe (4), welches das Gurtbandgewebe (2) und den Airbag (3; 3A) abdeckt; wobei das Maschengurtbandgewebe (4) aus einem Gewirke konstruiert ist, welches flexibel in eine Breitenrichtung, aber praktisch nicht in eine Längsrichtung ausgedehnt werden kann; und
den Halter (10), mit welchem ein Ende des Gurtairbags (1A; 1B; 1C) verbunden ist, wobei eine Öffnung (13) in dem Halter (10) vorhanden ist und wobei das Ende des Gurtairbags (1A; 1B; 1C) in die Öffnung (13) eingeführt ist und derart zurückgefaltet ist, dass es eine Basisendseite des Gurtairbags (1A; 1 B; 1C) überlappt und wobei das Ende und die Basisendseite des Gurtairbags (1A; 1 B; 1C) zusammengenäht sind,
wobei der Gurtairbag (1A; 1 B; 1 C) durch ein Gas ausgedehnt wird, welches in den Airbag (3, 3A) eingeführt wird;
wobei eine hintere Endseite des Maschengurtbandgewebes (4) und des Airbags (3; 3A) auf einen Mittelabschnitt in einer Längsrichtung des Gurtbandgewebes genäht sind;
wobei sich Seiten des Gurtbandgewebes (2) und des Maschengurtbandgewebes (4) mehr als ein Ende des Airbags (3) nach außen erstrecken;
wobei nur die Endseiten des Gurtbandgewebes (2) und des Maschengurtbandgewebes (4) in die Öffnung (13) eingeführt sind; und
wobei ein Endabschnitt des Maschengurtbandgewebes (4), welcher dem Ende bezüglich der Öffnung (13) näher liegt, an der Basisendseite des Gurtairbags (1A; 1B; 1 C) auf das Gurtbandgewebe (2), den Airbag (3; 3A) und das Maschengurtbandgewebe (4) zusammen genäht sind.

5. Verbindungskörper des Gurtairbags (1A; 1B; 1C) und des Halters (10) nach Anspruch 4, **dadurch gekennzeichnet, dass** sich das Gurtbandgewebe (2) innerhalb des Airbags (3A) durch diesen erstreckt

6. Verbindungskörper des Gurtairbags (1A; 1B; 1C) und des Halters (10) nach Anspruch 4 oder 5, **dadurch gekennzeichnet, dass** sich eine hintere Endseite des Maschengurtbandgewebes (4) bezüglich einer hinteren Endseite des Airbags (3; 3A) länger zu einer hinteren Endseite des Gurtbandgewebes (2) nach außen erstreckt, und dass das Maschengurtbandgewebe (4) und das Gurtbandgewebe (2) an einem Abschnitt in dem Maschengurtbandgewebe (4) zusammengenäht sind, welcher mit einem vorbestimmten Abstand von der hinteren Endseite des Airbags (3; 3A) beabstandet ist.

7. Verbindungskörper des Gurtairbags (1A; 1B; 1C) und des Halters (10) nach einem der Ansprüche 2 bis 6, **dadurch gekennzeichnet, dass** ein Nähvorgang für das Maschengurtbandgewebe (4) und das Gurtbandgewebe (2) derart ausgeführt ist, dass sich eine Naht (7) des Nähvorgangs im Wesentlichen in einer Richtung quer zu einer Längsrichtung des Maschengurtbandgewebes (4) erstreckt.

8. Verbindungskörper des Gurtairbags (1; 1A; 1B; 1C) und des Halters (10) nach einem der Ansprüche 1 bis 7, **dadurch gekennzeichnet, dass** ein Nähvorgang für die Endseite des Maschengurtbandgewebes (4) und die Basisendseite des Gurtairbags (1; 1A; 1 B; 1 C) derart ausgeführt ist, dass sich eine Naht (8) des Nähvorgangs im Wesentlichen in der Richtung quer zu der Längsrichtung des Maschengurtbandgewebes (4) erstreckt.

9. Verbindungskörper des Gurtairbags (1; 1A; 1B; 1C) und des Halters (10) nach einem der Ansprüche 1 bis 8, darüber hinaus eine Schutzabdeckung (5) umfassend, welche den Gurtairbag (1; 1A; 1 B; 1C) umgibt.

10. Gurtairbag-Vorrichtung umfassend:
den Verbindungskörper des Gurtairbags (1; 1A; 1 B; 1 C) und des Halters (10) nach einem der Ansprüche 1 des 9; und
einen Gasgenerator (11).

## Revendications

1. Corps relié d'une ceinture de sécurité gonflable (1 ; 1C) et d'un organe d'ancrage (10), comprenant :
une ceinture de sécurité gonflable (1 ; 1 C) comprenant,
un sac (3) ;
une sangle à mailles (4) recouvrant le sac (3), dans lequel la sangle à mailles (4) est réalisée avec un tissu tricoté qui peut être étendu de manière souple dans une direction d'élargissement, mais qui ne peut pas être étendu pratiquement dans une direction longitudinale ; et
un organe d'ancrage (10) auquel une extrémité terminale de la ceinture de sécurité gonflable (1 ; 1C) est reliée, dans lequel une ouverture (13) est prévue dans l'organe d'ancrage (10), et l'extrémité terminale de la ceinture de sécurité gonflable (1 ; 1C) est insérée dans l'ouverture (13) pour chevaucher un côté d'extrémité de base de la ceinture de sécurité gonflable (1 ; 1C), et le côté d'extrémité terminale et le côté d'extrémité de base de la ceinture de sécurité gonflable (1 ; 1C) sont cousus ensemble ;
dans lequel la ceinture de sécurité gonflable (1 ; 1C) est dilatée par le gaz introduit dans le sac (3) ;
**caractérisé en ce que**
un côté d'extrémité terminale de la sangle à mailles (4) s'étend davantage qu'une extrémité terminale du sac (3), **en ce que**
le côté d'extrémité terminale uniquement de la sangle à mailles (4) est inséré dans l'ouverture, et **en ce que**
la partie d'extrémité terminale de la sangle à mailles (4) située plus près de l'extrémité terminale par rapport à l'ouverture (13) est cousue sur le sac (3) et la sangle à mailles (4) ensemble du côté d'extrémité de base de la ceinture de sécurité gonflable (1 ; 1C).

2. Corps relié de la ceinture de sécurité gonflable (1 ; 1C) et de l'organe d'ancrage (10) selon la revendication 1, dans lequel la ceinture de sécurité gonflable (1 ; 1C) comprend en outre une sangle (2) dont une extrémité est reliée aux côtés d'extrémité arrière de la sangle à mailles (4) et du sac (3).

3. Corps relié de la ceinture de sécurité gonflable (1 ; 1C) et de l'organe d'ancrage (10) selon la revendication 2, dans lequel le côté d'extrémité arrière de la sangle à mailles (4) s'étend relativement plus loin vers la sangle (2) par rapport au côté d'extrémité arrière du sac (3), et la sangle à mailles (4) est cousue sur la sangle (2) au niveau d'une partie dans la sangle à mailles (4), qui est espacée du côté d'extrémité arrière du sac (3) d'une distance prédéterminée.

4. Corps relié d'une ceinture de sécurité gonflable (1A ; 1 B ; 1 C) et d'un organe d'ancrage (10), comprenant :
une ceinture de sécurité gonflable (1A ; 1 B ; 1C) comprenant,
une sangle (2) ;
un sac (3 ; 3A) suivant la sangle (2) ;
une sangle à mailles (4) recouvrant la sangle (2) et le sac (3 ; 3A) ; dans lequel la sangle à mailles (4) est réalisée avec un tissu tricoté qui peut être étendu de manière souple dans une direction d'élargissement, mais qui ne peut pas être étendu pratiquement dans une direction longitudinale ; et
un organe d'ancrage (10) auquel une extrémité terminale de la ceinture de sécurité gonflable (1 A ; 1 B ; 1 C) est reliée, dans lequel une ouverture (13) est prévue dans l'organe d'ancrage (10), et l'extrémité terminale de la ceinture de sécurité gonflable (1A ; 1B ; 1C) est insérée dans l'ouverture (13) et repliée pour être recouverte d'un côté d'extrémité de base de la ceinture de sécurité gonflable (1A ; 1B ; 1 C), et le côté d'extrémité terminale et le côté d'extrémité de base de la ceinture de sécurité gonflable (1A ; 1B ; 1C) sont cousus ensemble,
dans lequel la ceinture de sécurité gonflable (1A ; 1B ; 1C) est élargie par le gaz introduit dans le sac (3 ; 3A) ;
dans lequel les côtés d'extrémité arrière de la sangle à mailles (4) et du sac (3 ; 3A) sont cousus ensemble sur une partie centrale dans une direction longitudinale de la sangle ;
dans lequel les côtés d'extrémité terminale de la sangle (2) et de la sangle à mailles (4) s'étendent davantage qu'une extrémité terminale du sac (3) ;
dans lequel les côtés d'extrémité terminale uniquement de la sangle (2) et de la sangle à mailles (4) sont insérés dans l'ouverture (13) ; et
dans lequel une partie d'extrémité terminale de la sangle à mailles (4) située plus près de l'extrémité terminale par rapport à l'ouverture (13) est cousue sur la sangle (2), le sac (3 ; 3A) et la sangle à mailles (4) ensemble du côté d'extrémité de base de la ceinture de sécurité gonflable (1A ; 1 B ; 1 C).

5. Corps relié de la ceinture de sécurité gonflable (1B) et de l'organe d'ancrage (10) selon la revendication 4, dans lequel la sangle (2) s'étend à travers l'intérieur du sac (3A).

6. Corps relié de la ceinture de sécurité gonflable (1A ; 1B ; 1C) et de l'organe d'ancrage (10) selon la revendication 4 ou 5, dans lequel un côté d'extrémité arrière de la sangle à mailles (4) s'étend plus loin vers un côté d'extrémité arrière de la sangle (2) par rapport à un côté d'extrémité arrière du sac (3 ; 3A), et dans lequel la sangle à mailles (4) et la sangle (2) sont cousues ensemble au niveau d'une partie dans la sangle à mailles (4) espacée du côté d'extrémité arrière du sac (3 ; 3A) d'une distance prédéterminée.

7. Corps relié de la ceinture de sécurité gonflable (1 ; 1A ; 1B ; 1C) et de l'organe d'ancrage (10) selon l'une quelconque des revendications 2 à 6, dans lequel une tâche de couture pour la sangle à mailles (4) et la sangle (2) est effectuée de sorte qu'une couture (7) de la tâche de couture s'étend sensiblement dans une direction en travers d'une direction longitudinale de la sangle à mailles (4).

8. Corps relié de la ceinture de sécurité gonflable (1 ; 1A ; 1B ; 1C) et de l'organe d'ancrage (10) selon l'une quelconque des revendications 1 à 7, dans lequel une tâche de couture pour le côté d'extrémité terminale de la sangle à mailles (4) et le côté d'extrémité de base de la ceinture de sécurité gonflable (1 ; 1A ; 1B ; 1C) est effectuée de sorte qu'une couture (8) de la tâche de couture s'étend sensiblement dans la direction en travers de la direction longitudinale de la sangle à mailles (4).

9. Corps relié de la ceinture de sécurité gonflable (1 ; 1A ; 1B ; 1C) et de l'organe d'ancrage (10) selon l'une quelconque des revendications 1 à 8 comprenant en outre un revêtement de protection (5) pour entourer la ceinture de sécurité gonflable (1 ; 1A ; 1B ; 1C).

10. Dispositif de ceinture de sécurité gonflable, comprenant :
le corps relié de la ceinture de sécurité gonflable (1 ; 1A ; 1B ; 1C) et de l'organe d'ancrage (10) selon l'une quelconque des revendications 1 à 9 ; et
un générateur de gaz (11).
